# EUROPÄISCHE PATENTSCHRIFT

(11) **EP 1 260 800 B1**
(45) Veröffentlichungstag und Bekanntmachung des Hinweises auf die Patenterteilung: **30.07.2008**
(21) Anmeldenummer: 02009376.1
(22) Anmeldetag: 06.05.2002
(51) Int. Cl.: G01F 23/36

(54) **Verfahren und Vorrichtung zum Ermitteln des Füllstands in einem Kraftstoffvorratsbehälter**
Method and device for determining the filling level in fuel containers
Procédé et dispositif pour déterminer le niveau de remplissage de répicients de carburant

(30) Priorität: 23.05.2001 DE 10125355
(43) Veröffentlichungstag der Anmeldung: 27.11.2002
(73) Patentinhaber: Volkswagen Aktiengesellschaft, 38436 Wolfsburg (DE)
(72) Erfinder: Gerdtz, Uwe, 38118 Braunschweig (DE); Rodenjohann, Udo, 38528 Rolfsbüttel (DE); Degenhardt, Wolfgang, 38436 Wolfsburg (DE)
(74) Vertreter: Banzer, Hans-Jörg

(56) Entgegenhaltungen:
- DE-A- 2 038 333
- DE-A- 4 216 467
- US-A- 4 318 075
- US-A- 4 803 420

## Beschreibung

Die vorliegende Erfindung betrifft ein Verfahren sowie eine Vorrichtung zum Ermitteln des Füllstands eines Kraftstoffbehälters in Kraftfahrzeugen.

Eine derartige Vorrichtung ist durch die DE 43 24 919 A1 bekannt, in der eine Vorrichtung zur Anzeige des Füllstands in einem Behältnis mit zwei elektrischen Leitern beschrieben ist, die von einem Schieber verbunden werden, der von einem Schwimmer entsprechend des Füllstands im Behältnis entlang der beiden Leiter verschoben wird. In einer Ausführungsvariante sind an beiden Enden des einen Leiters und an einem Ende des anderen Leiters Stromleitungen angeschlossen, so dass bei einem elektrischen Leiter an beiden Enden Strom eingeleitet und ein Dreileiterkreis ausgebildet werden kann. Zur Bestimmung des Füllstands wird über die Anschlussleitungen der Teilwiderstand eines Leiters zwischen der Kontaktstelle des Schiebers und einem mit einer Anschlussleitung versehenen Ende des Leiters gemessen. Diese Vorrichtung weist insbesondere den Nachteil auf, dass der Füllstand im Behältnis fehlerhaft ermittelt wird, sobald ein Übergangswiderstand zwischen dem Schieber und den elektrischen Leitern auftritt, der sich zum gemessenen Teilwiderstand addiert und so eine korrekte Ermittlung des Füllstands verhindert.

Die US-A-4803420 betrifft eine Schaltungsanordnung zur Ermittlung der Stellung des Abgriffs eines Widerstandsferngebers, der zwei Festwiderstandsbereiche enthält, zwischen denen ein Nutzwiderstandsbereich angeordnet ist, in welchem der Abgriff verstellbar ist, und dessen erster Anschluss über einen ersten Leiter, der einen ersten Leitungswiderstand aufweist, mit einer Stromquelle verbunden und mit einem Instrumentenverstärker koppelbar ist und dessen einen mittleren Anschluss bildender Abgriff mit einem zweiten Leiter, der einen zweiten Leitungswiderstand aufweist, verbunden ist und dessen zweiter Anschluss über einen dritten Leiter, der einen dritten Leitungswiderstand aufweist, mit dem Instrumentenverstärker koppelbar ist. Dem Instrumentenverstärker ist ein Analog-DigitalUmsetzer nachgeschaltet, der mit einer Digitalrecheneinheit verbunden ist. Der dritte Leiter ist mit einem auf Nullpotenzial liegenden Bezugswiderstand verbunden. Die drei vom Widerstandsgeber wegführenden Leitungen mit den drei Leitungswiderständen sind mit den Eingängen eines Multiplexers verbunden, dessen Ausgänge mit dem Instrumentenverstärker verbunden sind. Der Multiplexer ist so schaltbar, dass eine erste Spannung über dem ersten Leitungswiderstand, dem Widerstand zwischen dem ersten und mittleren Anschluss des Widerstandsferngebers und dem zweiten Leitungswiderstand, eine zweite Spannung über dem zweiten Leitungswiderstand, dem Widerstand zwischen dem mittleren und dem zweiten Anschluss des Widerstandsferngebers und dem dritten Leitungswiderstand und eine dritte Spannung über dem Bezugswiderstand an die Eingänge des Instrumentenverstärkers zugeführt wird. In der Digitalrecheneinrichtung wird aus den Spannungen die Stellung des Abgriffs berechnet.

Der vorliegenden Erfindung liegt die Aufgabe zugrunde, ein Verfahren sowie eine Vorrichtung der eingangs genannten Art zu schaffen, bei denen der Füllstand im Kraftstoffbehälter eines Kraftfahrzeugs mit einer hohen Störsicherheit korrekt ermittelt werden kann. Insbesondere soll die Ermittlung des Füllstands unempfindlich gegen das Auftreten von Übergangswiderständen sein.

Erfindungsgemäß wird diese Aufgabe durch ein Verfahren mit den Merkmalen des Anspruchs 1 sowie eine Vorrichtung mit den Merkmalen des Anspruchs 6 gelöst. Die Unteransprüche definieren jeweils bevorzugte und vorteilhafte Ausführungsformen der vorliegenden Erfindung.

Die Widerstandsstrecke wird von der Abgreifstelle in zwei Abschnitte geteilt, deren Teilwiderstandswerte ermittelt werden. Die Summe der Widerstandswerte der beiden Abschnitte entspricht dem Gesamtwiderstandswert der Widerstandstrecke, der wiederum gerätespezifisch und daher bekannt ist. Im Falle einer Messung der Teilwiderstandswerte ohne Übergangswiderstand muss deren Summe gleich dem Gesamtwiderstandswert der Widerstandsstrecke sein. Tritt bei der Messung jedoch ein Übergangswiderstand auf, wirkt sich dieser gleichermaßen auf die Messung beider Teilwiderstandswerte aus, so dass durch Vergleich der Summe der beiden Teilwiderstandswerte und dem bekannten Gesamtwiderstandswert der Widerstandstrecke ein möglicherweise entstandener Übergangswiderstand zwischen der Abgreifstelle und der Widerstandstrecke ermittelt werden kann. Ein solcher Übergangswiderstand kann bei Gleitkontakten beispielsweise durch Oxidation oder durch Verschmutzung des Gleitkontakts bzw. eines elektrischen Leiters entstehen, zu dem der Gleitkontakt eine Verbindung herstellen soll. Bei offenen, dem Kraftstoff ausgesetzten Systemen kann der Kontakt an der Abgreifstelle durch Inhaltsstoffe des Kraftstoffs verschlechtert werden. Die beiden Enden der Widerstandsstrecke sind fest angeschlossen, so dass bei ihnen im Gegensatz zur variablen Abgreifstelle die Gefahr eines Übergangswiderstands wesentlich geringer ist und mit einer sehr hohen Wahrscheinlichkeit davon ausgegangen werden kann, dass ein ermittelter Übergangswiderstand der Abgreifstelle zuzuordnen ist.

Erfindungsgemäß wird durch Auswertung der Teilwiderstandswerte sowie des bekannten Gesamtwiderstandswerts der Widerstandsstrecke ein möglicherweise entstandener Übergangswiderstand bei der Abgreifstelle ermittelt und bei der Ermittlung des Füllstands berücksichtigt. Auf diese Weise kann trotz beeinträchtigter Kontaktierung bei der Abgreifstelle der Füllstand des Kraftstoffbehälters korrekt ermittelt werden.

Zusätzlich kann auf diese Weise das Auftreten eines Übergangswiderstands und somit eines zumindest drohenden Defekts der Füllstandermittlungsvorrichtung überwacht werden. Sobald der Übergangswiderstand ein bestimmtes Maß überschreitet, kann ein entsprechendes Warnsignal im Kraftfahrzeug abgegeben werden. Weiterhin kann ein derartiges Warnsignal auch abgespeichert werden, so dass bei einer Wartung bzw. beim Kundendienst des Kraftfahrzeugs ein unzulässig hoher Übergangswiderstand angezeigt wird.

Die Teilwiderstandswerte können beispielsweise durch Anlegen einer insbesondere bekannten Spannung an einen Abschnitt der Widerstandsstrecke zwischen der Abgreifstelle und einem Ende der Widerstandsstrecke und Messung des durch diesen Abschnitt fließenden Stroms ermittelt werden. Weiterhin können die Teilwiderstandswerte ermittelt werden, indem die Abschnitte der Widerstandsstrecke mit einem Vorwiderstand bekannten Werts in Reihe geschaltet werden, diese Reihenschaltung mit einer Spannung beaufschlagt wird und der Spannungsabfall an dem Vorwiderstand und/oder an dem Abschnitt der Widerstandsstrecke ermittelt wird. Wird dabei eine bekannte Spannung an die Serienschaltung aus Vorwiderstand und Abschnitt der Widerstandsstrecke angelegt, reicht zum Bestimmen eines Teilwiderstandswerts die Messung eines Spannungsabfalls entweder am Vorwiderstand oder am Abschnitt der Widerstandsstrecke. Es kann jedoch auch eine unbekannte Spannung oder eine Spannung mit einer geringen Konstanz verwendet werden und der Spannungsabfall sowohl am Vorwiderstand als auch am Abschnitt der Widerstandsstrecke ermittelt werden und anschließend das Verhältnis der beiden Spannungsabfälle zur Ermittlung des Teilwiderstandswerts gebildet werden.

In einer Ausführungsform wird die gesamte Widerstandstrecke mit einer Spannung beaufschlagt und wird die Spannung zumindest zwischen einem Ende der Widerstandsstrecke und der Abgreifstelle ermittelt, wobei die Spannungsmessung hochohmig erfolgt. Auf diese Weise wird ein möglicher Übergangswiderstand bei der Abgreifstelle zur Widerstandsstrecke bei der Messung bereits berücksichtigt, so dass für die Messwertauswertung zum Ermitteln des Füllstands nur noch ein geringer Aufwand erforderlich ist. Durch die hochohmige Messung, bei der während der Spannungsmessung im Vergleich zum Strom durch die Widerstandsstrecke ein vernachlässigbar geringer Strom durch die Abgreifstelle fließt, fällt bei einer rechnerischen Bestimmung der an der Abgreifstelle anliegenden Spannung ein dort auftretender Übergangswiderstand heraus, so dass bei hochohmiger Messung der dort auftretenden Spannung die Position der Abgreifstelle an der Widerstandsstrecke und damit der Füllstand des Kraftstoffbehälter korrekt ermittelt werden kann, da ein Übergangswiderstand an der Abgreifstelle durch die Art, wie an diesem Punkt die Spannung entsteht, bereits berücksichtigt ist.

Die Widerstandsstrecke kann insbesondere eine Serienschaltung von Einzelwiderständen sein, wobei die Anschlüsse der Einzelwiderstände mit Abgreifkontakten verbunden sind, entlang derer ein die Abgreifstelle bzw. einen Mittelkontakt bildender Kontakt bewegt wird. Dieser Aufbau bildet eine Art diskretes Potientiometer mit dem Vorteil, dass die Widerstände mit einer hohen Genauigkeit und Zuverlässigkeit bereitgestellt werden können. Dabei können die Anschlüsse der Einzelwiderstände auch mit dem Mittelkontakt durch einzelne Schalter verbunden sein, die entsprechend des Füllstands geschlossen werden. Die Schalter können beispielsweise mechanisch, magnetisch oder optisch betätigbar sein.

Weiterhin kann die Widerstandsstrecke auch eine Leiterbahn aus einem Widerstandsmaterial und die Abgreifstelle ein auf der Leiterbahn verschiebbarer Schleifkontakt sein. Das Widerstandsmaterial kann insbesondere ein Material mit einem erhöhten Widerstand sein. Diese Ausführung besitzt den Vorteil, dass der Füllstand mit einer sehr hohen Auflösung ermittelt werden kann.

Die Erfindung wird nachfolgend anhand eines bevorzugten Ausführungsbeispiels unter Bezugnahme auf die beigefügte Zeichnung näher erläutert.

Fig. 1 zeigt den im Kraftstoffbehälter angeordneten Teil einer Vorrichtung zum Ermitteln des Kraftstofffüllstands gemäß dem Ausführungsbeispiel, und

Fig. 2 zeigt schematisch das Funktionsprinzip der Vorrichtung zum Ermitteln des Kraftstofffüllstands gemäß Fig. 1.

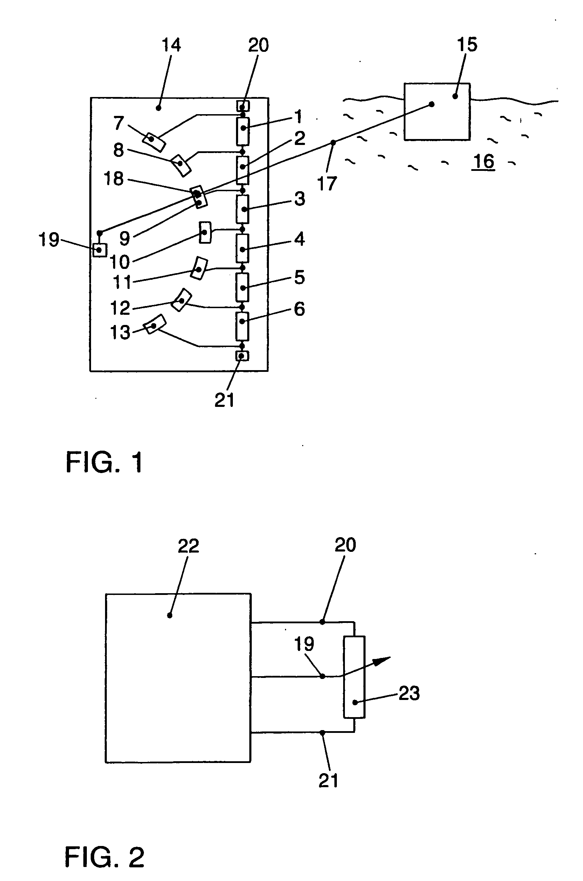

Der in Fig. 1 dargestellte Teil einer Vorrichtung zum Ermitteln des Füllstands an Kraftstoff 16 eines nicht dargestellten Kraftstoffbehälters weist eine Trägerplatte 14 auf, auf der mehrere in Reihe geschaltete Einzelwiderstände 1-6 angeordnet sind, die eine Widerstandsstrecke 23 bilden. Das obere bzw. das untere Ende der Widerstandsstrecke 23 ist mit einem oberen Anschluss 20 bzw. einem unteren Anschluss 21 verbunden, mittels derer elektrischen Leitungen an die Enden der Widerstandsstrecke 23 angeschlossen werden können. Weiterhin weist die Trägerplatte 14 Abgreifkontakte 7-13 auf, die mit den Verbindungsstellen zwischen zwei benachbarten Einzelwiderständen 1-6 bzw. dem oberen Anschluss 20 und dem unteren Anschluss 21 der Widerstandsstrecke 23 verbunden sind. Entlang der Abgreifkontakte 7-13 kann von einem Schwimmerarm 17 ein Schleifkontakt 18 verschoben werden, der eine Abgreifstelle an der Widerstandsstrecke 23 bildet. Der Schleifkontakt 18 ist mit einem Mittelkontakt 19 der Trägerplatte 14 verbunden, an den von außen eine elektrische Leitung anschließbar ist.

Der Schwimmerarm 17 ist mit einem Ende schwenkbar an der Trägerplatte 14 gelagert und ist mit seinem anderen Ende schwenkbar mit einem Schwimmer 15 verbunden. Der Schwimmer 15 besitzt eine geringere Dichte als der Kraftstoff 16 und folgt daher dessen Pegel im Behälter, so dass entsprechend des Kraftstoffpegels im Behälter der Schleifkontakt 18 mit einem bestimmten Abgreifkontakt 7-13 verbunden und der Mittelkontakt 19 an einer bestimmten Stelle an die Widerstandsstrecke 23 angeschlossen wird.

In Fig. 2 ist schematisch die komplette Vorrichtung zum Ermitteln des Füllstands dargestellt. Eine Messeinrichtung 22 ist über elektrische Leitungen mit beiden Anschlüssen 20, 21 der Widerstandsstrecke 23 und dem Mittelkontakt 19 verbunden. Um den Füllstands zu ermitteln, bestimmt die Messeinrichtung 22 zunächst einen ersten Teilwiderstandswert zwischen dem Mittelkontakt 19 und dem oberen Anschluss 20 der Widerstandsstrecke 23 und anschließend einen zweiten Teilwiderstandswert zwischen dem Mittelkontakt 19 und dem unteren Anschluss 21 der Widerstandsstrecke 23. Anhand der beiden Teilwiderstandswerte und dem bekannten Gesamtwiderstand der Widerstandsstrecke 23 ermittelt die Messeinrichtung 22 einen Übergangswiderstand zwischen dem Mittelkontakt 19 und der Widerstandsstrecke 23, der in der Regel auf Kontaktschwierigkeiten zwischen dem Schleifkontakt 18 und den Abgreifkontakten 7-13 zurückzuführen ist. Der Übergangswiderstand ist die Hälfte der Differenz zwischen der Summe der Teilwiderstandswerte und dem Gesamtwiderstand der Widerstandsstrecke 23.

In einem nachfolgenden Schritt wird anhand wenigstens eines Teilwiderstandswerts unter Berücksichtigung des Übergangswiderstands ein Sollwert für den Teilwiderstandswert ermittelt, der dem Teilwiderstandswert bei einem Übergangswiderstand von Null entspricht. Dieser Sollwert ist der gemessene Teilwiderstandswert abzüglich des ermittelten Übergangswiderstands und wird zur Ermittlung des Füllstands herangezogen, so dass unabhängig vom Übergangswiderstand der korrekte Füllstand ermittelt werden kann. Zusätzlich wird ein Warnsignal abgegeben, wenn der ermittelte Übergangswiderstand einen bestimmten Wert überschreitet.

In einer Variante legt die Messenrichtung 22 zum Ermitteln des Füllstands eine Konstantspannung bekannten Werts über die beiden Anschlüsse 20, 21 an die Widerstandsstrecke 23 an und mißt daraufhin die Spannung zwischen dem Mittelkontakt 19 und einem Ende der Widerstandsstrecke 23. Die Spannungsmessung wird hochohmig durchgeführt, so dass ein eventuell auftretender Übergangswiderstand zwischen dem Mittelkontakt 19 und der Anschlussstellen an der Widerstandsstrecke 23 bei der Spannungsmessung kompensiert wird. Anhand dieser Spannung ermittelt die Messeinrichtung 22 die Stellung des Schleifkontakts 18 und damit den Kraftstofffüllstand im Behälter.

Zusätzlich kann in dieser Variante die Messeinrichtung 22 auch so eingerichtet sein, dass die Konstantspannung über einen Vorwiderstand an die Widerstandstrecke 23 angelegt wird und die Messeinrichtung 22 eine zweite Spannung bestimmt, die an der Verbindungsstelle zwischen Vorwiderstand und Widerstandsstrecke 23 anliegt. Mit Hilfe dieser zweiten Spannung kann in Kenntnis des Werts des Vorwiderstands der Gesamtwiderstand der Widerstandsstrecke 23 ermittelt werden. Dieser gemessen Gesamtwiderstand kann mit dem Sollwert für den Gesamtwiderstand verglichen werden, um Veränderungen der Widerstandsstrecke 23 zu erfassen, die die Ermittlung des Füllstands beeinträchtigen könnten. Im Falle eines veränderten Gesamtwiderstands der Widerstandstrecke 23 kann der Messvorgang abgebrochen und ein entsprechender Warnhinweis erfolgen. Auf diese Weise kann die Sicherheit bei der Ermittlung des Füllstands erhöht werden.

### BEZUGSZEICHENLISTE

- 1-6: Einzelwiderstände
- 7-13: Abgreifkontakte
- 14: Trägerplatte
- 15: Schwimmer
- 16: Kraftstoff
- 17: Schwimmerarm
- 18: Schleifkontakt bzw. Abgreifstelle
- 19: Mittelkontakt
- 20: Oberer Anschluss der Widerstandsstrecke
- 21: Unterer Anschluss der Widerstandsstrecke
- 22: Messeinrichtung
- 23: Widerstandsstrecke

## Patentansprüche

1. Verfahren zum Ermitteln des Füllstands eines Kraftstoffbehälters eines Kraftfahrzeugs mittels einer Vorrichtung, die derart eingerichtet ist, daß sie eine Abgreifstelle (18) an einer Widerstandsstrecke (23) entsprechend des Pegels des Kraftstoffs (16) im Kraftstoffbehälter positioniert, bei welchem Verfahren der Widerstandswert zwischen der Abgreifstelle (18) und einem Ende (20, 21) der Widerstandsstrecke (23) ermittelt wird, **dadurch gekennzeichnet, daß** zwei Teilwiderstandswerte zwischen der Abgreifstelle (18) und einem ersten Ende (20) der Widerstandsstrecke (23) bzw. der Abgreifstelle (18) und einem zweiten Ende (21) der Widerstandsstrecke (23) ermittelt werden, anhand der ermittelten Teilwiderstandswerte und des Gesamtwiderstandswerts der Widerstandsstrecke (23) ein Übergangswiderstandswert zwischen der Abgreifstelle (18) und der Widerstandsstrecke (23) ermittelt wird, und mittels wenigstens eines Teilwiderstandswerts unter Berücksichtigung des Übergangswiderstandswerts der Füllstand des Kraftstoffbehälters ermittelt wird.

2. Verfahren nach Anspruch 1, **dadurch gekennzeichnet, daß** zur Ermittlung des Teilwiderstandswerts eines Abschnitts der Widerstandsstrecke (23) zwischen der Abgreifstelle (18) und einem Ende (20, 21) der Widerstandsstrecke (23) dieser Abschnitt mit einer bekannten Spannung beaufschlagt und der durch diesen Abschnitt fließende Strom ermittelt wird.

3. Verfahren nach Anspruch 1, **dadurch gekennzeichnet, daß** zur Ermittlung des Teilwiderstandswerts eines Abschnitts der Widerstandsstrecke (23) zwischen der Abgreifstelle (18) und einem Ende (20, 21) der Widerstandsstrecke (23) dieser Abschnitt mit einem bekannten Widerstand in Serie geschaltet mit einer Spannung beaufschlagt und der Spannungsabfall an dem bekannten Widerstand und/oder an dem Abschnitt der Widerstandsstrecke (23) ermittelt wird.

4. Verfahren nach Anspruch 1, **dadurch gekennzeichnet, daß** die Widerstandsstrecke (23) mit einer Messspannung beaufschlagt wird, der Spannungsabfall zwischen der Abgreifstelle (18) und einem Ende (20, 21) der Widerstandsstrecke (23) gemessen wird und anhand des Verhältnisses des Spannungsabfalls zu der Messspannung der Füllstand ermittelt wird.

5. Verfahren nach Anspruch 4, **dadurch gekennzeichnet, daß** der Spannungsabfall zwischen der Abgreifstelle (18) und einem Ende der Widerstandsstrecke (23) hochohmig gemessen wird.

6. Vorrichtung zum Ermitteln des Füllstands eines Kraftstoffbehälters eines Kraftfahrzeugs mit einer Widerstandsstrecke (23), einem Mittelkontakt (19) und einer Pegelerfassungseinrichtung (15, 17), die zum Positionieren einer Abgreifstelle (18) des Mittelkontakts (19) an der Widerstandsstrecke (23) mit zwei Enden (20, 21) entsprechend dem Pegel des Kraftstoffs (16) im Kraftstoffbehälter eingerichtet ist, **dadurch gekennzeichnet, daß** die Vorrichtung eine Messwerterfassungseinrichtung (22) aufweist, die mit beiden Enden (20, 21) der Widerstandsstrecke (23) elektrisch verbunden ist und zum Ermitteln zweier Teilwiderstandswerte zwischen der Abgreifstelle (18) und einem ersten Ende (20) der Widerstandsstrecke (23) bzw. zwischen der Abgreifstelle (18) und einem zweiten Ende (21) der Widerstandsstrecke (23), zum Ermitteln eines Übergangswiderstandswerts zwischen dem Mittelkontakt (19) und der Widerstandsstrecke (23) anhand der ermittelten Teilwiderstandswerte und des Gesamtwiderstandswerts der Widerstandsstrecke (23), und zum Ermitteln des Füllstands des Kraftstoffbehälters mittels wenigstens eines Teilwiderstandswerts unter Berücksichtigung des Übergangswiderstandswerts ausgestaltet ist.

7. Vorrichtung nach Anspruch 6, **dadurch gekennzeichnet, daß** die Widerstandsstrecke (23) eine Serienschaltung von Einzelwiderständen (1-6) ist, Anschlüsse der Einzelwiderstände (1-6) mit Abgreifkontakten (7-13) verbunden sind, und die Pegelerfassungseinrichtung (15, 17) zum Positionieren des Mittelkontakts (18) entsprechend dem Kraftstoffpegel auf einem der Abgreifkontakte (7-13) ausgestaltet ist.

8. Vorrichtung nach Anspruch 6, **dadurch gekennzeichnet, daß** die Widerstandsstrecke (23) eine Serienschaltung von Einzelwiderständen ist, Verbindungspunkte zwischen Einzelwiderständen jeweils mittels eines Schalters mit dem Mittelkontakt elektrisch verbunden sind und die Pegelerfassungseinrichtung zum Schließen eines der Schalter entsprechend dem Kraftstoffpegel ausgestaltet ist.

9. Vorrichtung nach Anspruch 8, **dadurch gekennzeichnet, daß** die Schalter magnetisch betätigbar sind und die Pegelerfassungseinrichtung einen Magneten aufweist und zum Positionieren des Magneten bei wenigstens einem der Schalter entsprechend dem Kraftstoffpegel ausgestaltet ist.

10. Vorrichtung nach Anspruch 6, **dadurch gekennzeichnet, daß** die Widerstandsstrecke (23) eine Leiterbahn aus einem Widerstandsmaterial ist und die Abgreifstelle von einem auf der Leiterbahn verschiebbaren Schleifkontakt gebildet ist.

## Claims

1. Method for determining the filling level in a fuel container of a motor vehicle by means of a device which is configured in such a way that it positions a tapping point (18) on a resistance path (23) in accordance with the level of the fuel (16) in the fuel container, in which method the resistance value between the tapping point (18) and one end (20, 21) of the resistance path (23) is determined, **characterized in that** two partial resistance values between the tapping point (18) and a first end (20) of the resistance path (23) or the tapping point (18) and a second end (21) of the resistance path (23) are determined, a contact resistance value between the tapping point (18) and the resistance path (23) is determined by means of the partial resistance values which are determined and the total resistance value of the resistance path (23), and the filling level of the fuel container is determined by means of at least one partial resistance value taking into account the contact resistance value.

2. Method according to Claim 1, **characterized in that**, in order to determine the partial resistance value of a section of the resistance path (23) between the tapping point (18) and one end (20, 21) of the resistance path (23), a known voltage is applied to this section and the current flowing through this section is determined.

3. Method according to Claim 1, **characterized in that**, in order to determine the partial resistance value of a section of the resistance path (23) between the tapping point (18) and one end (20, 21) of the resistance path (23), a voltage is applied to this section when it is connected in series with a known resistor, and the voltage drop at the known resistor and/or at the section of the resistance path (23) is determined.

4. Method according to Claim 1, **characterized in that** a measuring voltage is applied to the resistance path (23), and the voltage drop between the tapping point (18) and one end (20, 21) of the resistance path (23) is measured, and the filling level is determined by means of the ratio of the voltage drop to the measuring voltage.

5. Method according to Claim 4, **characterized in that** the voltage drop between the tapping point (18) and one end of the resistance path (23) is measured with high impedance.

6. Device for determining the filling level in a fuel container of a motor vehicle having a resistance path (23), a central contact (19) and a level-detection device (15, 17) which is configured to position a tapping point (18) of the central contact (19) on the resistance path (23) with two ends (20, 21) in accordance with the level of the fuel (16) in the fuel container, **characterized in that** the device has a measured value-detection device (22) which is electrically connected to both ends (20, 21) of the resistance path (23) and is designed to determine two partial resistance values between the tapping point (18) and a first end (20) of the resistance path (23) or between the tapping point (18) and a second end (21) of the resistance path (23), to determine a contact resistance value between the central contact (19) and the resistance path (23) by means of the partial resistance values which are determined and the total resistance value of the resistance path (23), and to determine the filling level of the fuel container by means of at least one partial resistance value taking into account the contact resistance value.

7. Device according to Claim 6, **characterized in that** the resistance path (23) is a series connection of individual resistors (1-6), terminals of the individual resistors (1-6) are connected to tapping contacts (7-13), and the level-detection device (15, 17) is designed to position the central contact (18) on one of the tapping contacts (7-13) in accordance with the fuel level.

8. Device according to Claim 6, **characterized in that** the resistance path (23) is a series circuit of individual resistors, connection points between individual resistors are each electrically connected to the central contact by means of a switch, and the level-detection device is designed to close one of the switches in accordance with the fuel level.

9. Device according to Claim 8, **characterized in that** the switches can be activated magnetically and the level-detection device has a magnet and is designed to position the magnet at at least one of the switches corresponding to the fuel level.

10. Device according to Claim 6, **characterized in that** the resistance path (23) is a conductor track composed of a resistance material, and the tapping point is formed by a slider contact which can be slid on the conductor track.

## Revendications

1. Procédé pour déterminer le niveau de remplissage d'un réservoir à carburant d'un véhicule automobile au moyen d'un dispositif qui est conçu de telle sorte qu'il positionne un point de prélèvement (18) sur une portion résistive (23) correspondant au niveau du carburant (16) dans le réservoir à carburant, procédé avec lequel est déterminée la valeur de la résistance entre le point de prélèvement (18) et une extrémité de la portion résistive (23), **caractérisé en ce que** deux valeurs de résistance partielle entre le point de prélèvement (18) et une première extrémité (20) de la portion résistive (23) ou le point de prélèvement (18) et une deuxième extrémité (21) de la portion résistive (23) sont déterminées, une valeur de résistance de transition entre le point de prélèvement (18) et la portion résistive (23) est déterminée à l'aide des valeurs de résistance partielle déterminées et de la valeur de la résistance totale de la portion résistive (23), et le niveau de remplissage du réservoir à carburant est déterminé au moyen d'au moins une valeur de résistance partielle en tenant compte de la valeur de résistance de transition.

2. Procédé selon la revendication 1, **caractérisé en ce que** pour déterminer la valeur de la résistance partielle d'une section de la portion résistive (23) entre le point de prélèvement (18) et une extrémité (20, 21) de la portion résistive (23), cette section est soumise à une tension connue et le courant qui circule dans cette section est déterminé.

3. Procédé selon la revendication 1, **caractérisé en ce que** pour déterminer la valeur de résistance partielle d'une section de la portion résistive (23) entre le point de prélèvement (18) et une extrémité (20, 21) de la portion résistive (23), cette section est branchée en série avec une résistance connue et soumise à une tension connue et la chute de tension aux bornes de la résistance connue et/ou aux bornes de la section de la portion résistive (23) est déterminée.

4. Procédé selon la revendication 1, **caractérisé en ce que** la portion résistive (23) est soumise à une tension de mesure, la chute de tension entre le point de prélèvement (18) et une extrémité (20, 21) de la portion résistive (23) est mesurée et le niveau de remplissage est déterminé au moyen du rapport entre la chute de tension et la tension de mesure.

5. Procédé selon la revendication 4, **caractérisé en ce que** la chute de tension entre le point de prélèvement (18) et une extrémité de la portion résistive (23) est mesurée en haute impédance.

6. Dispositif pour déterminer le niveau de remplissage d'un réservoir à carburant d'un véhicule automobile comprenant une portion résistive (23), un contact central (19) et un dispositif de détection de niveau (15, 17), qui est conçu pour positionner un point de prélèvement (18) du contact central (19) sur la portion résistive (23) comprenant deux extrémités (20, 21) correspondant au niveau du carburant (16) dans le réservoir à carburant, **caractérisé en ce que** le dispositif comprend un dispositif d'acquisition de valeurs mesurées (22) qui est relié électriquement avec les deux extrémités (20, 21) de la portion résistive (23) et qui est configuré pour déterminer deux valeurs de résistance partielle entre le point de prélèvement (18) et une première extrémité (20) de la portion résistive (23) ou entre le point de prélèvement (18) et une deuxième extrémité (21) de la portion résistive (23), pour déterminer une valeur de résistance de transition entre le contact central (19) et la portion résistive (23) à l'aide des valeurs de résistance partielle déterminées et de la valeur de la résistance totale de la portion résistive (23), et pour déterminer le niveau de remplissage du réservoir à carburant au moyen d'au moins une valeur de résistance partielle en tenant compte de la valeur de résistance de transition.

7. Dispositif selon la revendication 6, **caractérisé en ce que** la portion résistive (23) est un circuit série constitué de résistances individuelles (1 6), les bornes des résistances individuelles (1 - 6) sont reliées avec des contacts de prélèvement (7 - 13) et le dispositif de détection de niveau (15, 17) est conçu pour positionner le contact central (18) sur l'un des contacts de prélèvement (7 - 13) en fonction du niveau de carburant.

8. Dispositif selon la revendication 6, **caractérisé en ce que** la portion résistive (23) est un circuit série constitué de résistances individuelles les points de liaison entre les résistances individuelles sont reliés électriquement avec le contact central à chaque fois au moyen d'un commutateur et le dispositif de détection de niveau est conçu pour fermer l'un des commutateurs en fonction du niveau de carburant.

9. Dispositif selon la revendication 8, **caractérisé en ce que** les commutateurs peuvent être actionnés de façon magnétique et le dispositif de détection de niveau présente un aimant et est conçu pour positionner l'aimant près d'au moins l'un des commutateurs en fonction du niveau de carburant.

10. Dispositif selon la revendication 6, **caractérisé en ce que** la portion résistive (23) est une piste conductrice en un matériau résistif et le point de prélèvement est formé par un contact glissant pouvant coulisser sur la piste conductrice.
